# NOUVEAU FASCICULE DE BREVET EUROPEEN

(11) **EP 1 659 247 B3**
(45) Date de publication du présent fascicule: **06.08.2025**
(45) Mention de la délivrance du brevet: 06.11.2013
(21) Numéro de dépôt: 05110427.1
(22) Date de dépôt: 07.11.2005
(51) Int. Cl.: B60J 1/16, E05D 15/10, E05C 1/10, E05B 17/00

(54) **Dispositif d'obturation d'une baie à l'aide d'un panneau mobile au moyen de verrouillage participant au déplacement du panneau, et véhicule correspondant**
Schliesseinrichtung einer Öffnung mittels einer beweglichen Scheibe mit an der Bewegung beteiligten Verriegelungsmitteln, und zugehöriges Fahrzeug
Closing unit for an opening by means of a movable panel having locking means involved in the movement of the panel, and corresponding vehicle

(30) Priorité: 19.11.2004 FR 0412319
(43) Date de publication de la demande: 24.05.2006
(73) Titulaire: Advanced Comfort Systems France SAS - ACS France, 79300 Bressuire (FR)
(72) Inventeur: Content, Mickaël, 79300, Bressuire (FR); Destouches, Nicolas, 79300, Bressuire (FR)
(74) Mandataire: Bioret, Ludovic

(56) Documents cités:
- EP-A1- 0 972 663
- EP-A2- 1 407 909
- DE-A1- 19 938 789
- FR-A1- 2 849 093

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile coulissante, susceptible de libérer ou de fermer une ouverture ménagée dans ces dispositifs.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres est de rendre celle-ci mobile verticalement dans son propre plan, en la faisant pénétrer ou sortir du caisson ou de la garniture des portières latérales.

Cette technique présente cependant de nombreux inconvénients. Les moyens d'actionnement et d'entraînement sont lourds, encombrants et complexes à monter. Les portes qui en résultent présentent en conséquence un volume important, nuisant au volume disponible à l'intérieur du véhicule (largeur aux coudes notamment).

Elles ont de plus un coût de fabrication élevé et posent classiquement des problèmes d'étanchéité. La maintenance est également complexe. Elles imposent en outre des contraintes sur le plan de l'esthétique et de l'ergonomie.

Une autre technique a été proposée par le titulaire de la présente demande de brevet. Cette technique est notamment décrite dans les documents de brevet EP- 0 778 168 et EP- 0 857 844. Le dispositif d'obturation (appelé par la suite "baie flush") présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie « flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172. On résout ainsi la plupart des problèmes identifiés plus haut.

Sur le plan esthétique, la baie « flush » présente, vue de l'extérieur, un aspect lisse, affleurant avec la carrosserie, du fait qu'aucun cadre n'est nécessaire.

Le mouvement de la partie mobile peut être, par exemple, basculant ou coulissant. On décrit ci-après, rapidement, un exemple de ce dernier cas.

Pour assurer un coulissement de la partie mobile, constituée généralement par un panneau transparent, les moyens fonctionnels comprennent un dispositif de guidage comportant un premier et un second rails de guidage montés fixes sur l'ensemble fixe de la baie, de part et d'autre de l'ouverture fermée par le panneau mobile. Celui-ci est monté sur les rails, pour coulisser selon une direction longitudinale, dans un plan de coulissement entre une (ou plusieurs) position d'ouverture et une position intermédiaire de dégagement dans laquelle il est en regard de la baie et dégagé de celle-ci.

Selon une technique particulière, des moyens d'articulation assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie.

De telles articulations permettent ainsi au panneau mobile de passer du plan formé par l'ensemble fixe (position d'obturation) à un plan sensiblement parallèle de coulissement, et réciproquement.

Cette décomposition de mouvements de déplacement longitudinal et d'enchâssement transversal est particulièrement avantageuse, car elle permet une ouverture du panneau le long du véhicule (par exemple parallèlement au flanc de celui-ci) tout en assurant à la fermeture, un enchâssement du panneau dans la baie.

On notera qu'il a été envisagé de combiner les deux mouvements, sous la forme d'un mouvement louvoyant, selon lequel le bord distal de la partie mobile se trouve, en fin de course, dans le plan de la baie (la partie mobile étant alors « en travers », entre le plan d'obturation et le plan de coulissement). Il suffit alors de ramener, manuellement, le bord proximal pour assurer l'obturation.

L'invention se rapporte plus particulièrement à ce type de dispositif d'obturation, à ses variantes et ses perfectionnements. Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle.

Concernant les dispositifs à mouvement louvoyant, ceux-ci posent de nombreux problèmes notamment en termes d'étanchéité et d'esthétique, du fait que le jeu entre le panneau mobile et l'ouverture dans l'ensemble fixe doit être important à l'arrière.

Outre ces problèmes, ces dispositifs d'obturation sont généralement insuffisamment sécurisés : il suffit d'appuyer sur le panneau mobile pour le décaler, puis de le forcer à coulisser, pour pénétrer dans le véhicule. Il est donc nécessaire de prévoir des moyens anti-intrusion spécifiques, complexifiant notablement la structure du dispositif et, par conséquent, augmentant son prix de revient.

De plus, avec les solutions de l'art antérieur, il est le plus souvent nécessaire que l'utilisateur effectue une démarche active pour mettre en oeuvre les moyens de verrouillage mis à sa disposition, faute de quoi la baie n'est pas sécurisée.

Cela étant, lorsqu'on pense à les utiliser, les moyens de verrouillage classiques sont souvent peu ergonomiques et/ou pratiques, et nécessitent notamment de procéder à un effort, par exemple de serrage, pour obtenir le verrouillage.

Un exemple de tels moyens de verrouillage, correspondant au préambule de la revendication 1, est décrit dans le document EP-0 972 663-A1. Selon cette approche, une poignée de verrouillage présente deux zones fonctionnelles d'épaisseur différentes, correspondant respectivement à une position verrouillée et à une position de libération, reliées par un plan incliné permettant un passage progressif d'une des positions à l'autre, par appui sur un élément d'appui fixe.

L'invention a donc notamment pour objectif de pallier les inconvénients de l'art antérieur cités ci-dessus.

Plus précisément, l'invention a pour objectif de proposer un dispositif d'obturation d'une baie intégrant un panneau mobile, simplifiant les opérations d'ouverture et de fermeture de ce panneau, et le verrouillage de celui-ci en position fermée.

Selon un aspect particulier de l'invention, un objectif est également de fournir un tel dispositif, qui intègre des moyens anti-intrusion plus efficaces et plus simples que ceux de l'art antérieur.

L'invention a également pour objectif de fournir un tel dispositif d'obturation d'une baie qui permette un verrouillage fiable et sans effort.

L'invention a encore pour objectif de fournir un tel dispositif d'obturation d'une baie qui soit simple à réaliser, à monter sur une portière ou sur un véhicule.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

Ces objectifs, ainsi que d'autres qui apparaîtront par la suite, sont atteints à l'aide d'un dispositif d'obturation d'une baie ménagée dans la carrosserie d'un véhicule automobile selon la revendication 1.

De cette façon, on obtient des moyens de verrouillage qui sont directement impliqués dans le déplacement du panneau mobile d'une position d'obturation vers une position de dégagement, lors de l'ouverture, ou inversement lors de la fermeture.

En d'autres termes, la manipulation du dispositif consistant à ouvrir le panneau implique automatiquement le déverrouillage du dispositif et son décalage dans le plan de coulissement, tandis que l'obturation complète de la baie par le panneau entraîne systématiquement le verrouillage du dispositif Ceci s'avère donc avantageux pour l'utilisateur qui n'a pas à pratiquer une opération spécifique pour obtenir le verrouillage/déverrouillage du dispositif

Par ailleurs, on obtient grâce à l'invention une diminution de l'entrefer entre le chant du panneau coulissant et le chant de l'ensemble fixe, ce qui tend à améliorer l'ergonomie et l'esthétique de la baie flush.

Selon l'invention, lesdits moyens de verrouillage sont mobiles, lors du verrouillage/déverrouillage, selon une direction sensiblement perpendiculaire à l'axe de coulissement dudit panneau mobile et parallèlement audit panneau mobile.

L'utilisateur exerce ainsi une action dans un plan parallèle à celui du panneau, cette action étanttrans-formée en un effort produit sur le panneau dans une direction perpendiculaire au plan du panneau pour obtenir un déplacement de celui-ci correspondant à son décalage à partir de la baie ou à son réengagement dans l'ouverture de la baie.

La manipulation de la baie peut ainsi être rendue très pratique et sans effort, comme cela va apparaître plus clairement par la suite.

Selon un mode de réalisation préféré, lesdits moyens de verrouillage comprennent des moyens de blocage d'inviolabilité destinés à venir en butée sur ladite gâche de façon à interdire, en position de verrouillage, un déplacement dudit panneau dans une direction sensiblement perpendiculaire audit plan défini par ledit ensemble fixe.

On obtient ainsi un moyen anti-intrusion particulièrement simple et efficace, dans la mesure où il prend place de façon opérationnelle chaque fois que le panneau est en position d'obturation, sans nécessiter de pièce spécifique supplémentaire.

Selon une solution avantageuse, ledit pêne coopère, en position de coulissement dudit panneau, avec ledit élément de support et/ou de guidage.

Le pêne exerce ainsi une double fonction : celle consistant à guider le panneau dans une position d'obturation et de verrouillage, et celle de contribuer au guidage du panneau lors du coulissement de celui-ci le long de la baie.

Selon l'invention, le dispositif comprend des moyens de rappel élastiques tendant à ramener lesdits moyens de verrouillage dans ladite position verrouillée.

On assure ainsi de façon fiable un retour systématique du panneau en position de verrouillage lorsque celui-ci est placé dans l'encadrement de la baie à obturer.

Sion l'invention le dispositif comprend deux éléments de support et/ou de guidage de part et d'autre dudit panneau associés chacun à une gâche, lesdits moyens de verrouillage comprenant un pêne pour chaque gâche.

Le panneau peut de cette façon être déplacé de façon identique (ou quasiment) par rapport à chaque élément de guidage. Par exemple dans le cas d'un panneau mobile déplacé horizontalement, on obtient, avec deux systèmes à gâche/pêne sensiblement alignés verticalement, un mouvement identique pour la partie supérieure et la partie inférieure du panneau.

Dans ce cas, le dispositif comprend deux poignées d'actionnement, une pour chaque pêne, lesdites poignées étant montées au voisinage l'une de l'autre de façon à pouvoir être manipulées d'une seule main.

Le dispositif peut ainsi être manipulé aisément.

Selon un mode de réalisation particulier, le dispositif comprend au moins une poignée d'actionnement desdits moyens de verrouillage mobile entre une position de rangement selon laquelle elle s'encastre dans un logement et une position de préhension, hors dudit logement.

On limite ainsi l'encombrement du dispositif à l'intérieur de l'habitacle du véhicule.

Dans ce cas, ladite poignée d'actionnement est préférentiellement équipée de moyens de rappel tendant à la ramener dans ladite position de rangement.

Selon une autre caractéristique avantageuse, ledit ou lesdits éléments de support et/ou de guidage présentent au moins un logement formant cran d'arrêt, dans lequel ledit ou lesdits pênes sont susceptibles de se loger, dans une position intermédiaire dudit panneau.

Un tel agencement contribue à assurer la sécurité des utilisateurs vis-à-vis d'une fermeture brutale et impromptue du panneau coulissant. En effet, lors d'un freinage violent du véhicule par exemple, il est possible, en l'absence de cran d'arrêt, que le panneau coulisse violemment jusqu'à une position proche de l'ensemble fixe dans laquelle elle peut pincer ou heurter par exemple un doigt, une main ou un bras d'un utilisateur.

Un système à cran d'arrêt permet donc d'éviter ce genre de situation.

Bien entendu, plusieurs crans d'arrêt peuvent être prévus de façon à proposer différentes positions d'ouverture dans lesquelles le panneau est retenu.

Selon une solution avantageuse, ledit panneau mobile porte au moins un patin destiné à coulisser dans ledit ou lesdits éléments de support et/ou de guidage, au moins une partie dudit ou desdits patins coulissant dans ledit ou lesdits éléments de support et/ou de guidage étant réalisé en un matériau souple.

Un tel patin permet de rattraper les éventuels jeux apparaissant sur les éléments de guidage.

De plus, un patin ainsi constitué autorise la mise en oeuvre d'éléments de guidage de forme complexe.

Dans ce cas, ledit ou lesdits patins sont préférentiellement reliés audit panneau mobile par un axe revêtu d'un matériau élastomère entouré d'une bague réalisée dans un matériau plastique à faible coefficient de frottement.

On assure ainsi la souplesse du patin lui permettant d'absorber d'éventuelles imperfections et/ou formes complexes de l'élément de guidage, tout en préservant sa capacité à glisser parfaitement dans l'élément de guidage.

Selon encore une autre caractéristique de l'invention, ledit ensemble présente un joint d'étanchéité sur lequel ledit panneau mobile est destiné à venir prendre appui en position d'obturation, ledit joint comprenant au moins une partie formant lèvre d'étanchéité et au moins une partie tubulaire s'étendant sensiblement parallèlement à ladite lèvre.

Un tel joint permet d'assurer, en plus d'une bonne étanchéité à l'eau, une isolation acoustique grâce à l'élément tubulaire qui, comme la lèvre, entoure la baie.

Dans ce cas, ladite lèvre est avantageusement portée par ladite partie tubulaire.

Préférentiellement, ladite lèvre s'étend en côté de ladite partie tubulaire de façon que ledit panneau vienne en appui sur ladite lèvre et sur ladite partie tubulaire.

On s'assure de cette façon que les deux parties du joint sont mises à contribution lors de la fermeture du panneau.

Selon encore un autre aspect de l'invention, ledit ensemble fixe comprend des moyens de réception de la partie avant dudit panneau mobile, selon la direction de fermeture, lesdits moyens de réception comprenant des moyens d'amortissement des déplacements de ladite partie avant.

On peut ainsi amortir le contact entre le panneau et les moyens de réception, ce qui procure une sensation d'utilisation plus ouatée pour l'utilisateur.

De plus, on préserve ainsi les pièces en leur évitant une usure prématurée due aux frottements répétés entre elles.

Dans ce cas, lesdits moyens d'amortissement comprennent préférentiellement au moins un coussinet.

L'invention concerne également un véhicule équipé d'un dispositif d'obturation tel que décrit précédemment.

D'autres caractéristiques et avantages de l'invention apparaîtront plus clairement à la lecture de la description suivante d'un mode de réalisation préférentiel de l'invention, et de certaines de ses variantes, donnés à titre d'exemples illustratifs et non limitatifs, et des dessins parmi lesquels :
- la figure 1 est une vue en perspective d'un dispositif d'obturation selon l'invention ;
- la figure 2 est une vue éclatée de l'ensemble mobile d'un dispositif d'obturation selon l'invention ;
- la figure 3 est une vue isolée des moyens de verrouillage et des moyens d'actionnement associés ;
- la figure 4 est une vue en coupe de côté d'un dispositif d'obturation selon l'invention, au voisinage d'une extrémité de celui-ci ;
- la figure 5 est une vue élargie du dispositif illustré par la figure 1;
- la figure 6 est une vue d'un pêne destiné à équiper un dispositif d'obturation selon l'invention ;
- la figure 7 est une vue d'un mode de réalisation particulierd'une poignée destinée à équiper un dispositif d'obturation selon l'invention ;
- la figure 8 est une vue d'un rail de guidage destiné à équiper un dispositif d'obturation selon l'invention ;
- la figure 9 est une vue d'un patin de rattrapage destiné à équiper un dispositif d'obturation selon l'invention ;
- les figures 10 à 12 sont chacune une vue d'une variante de réalisation d'un joint d'étanchéité destiné à équiper un dispositif d'obturation selon l'invention ;
- la figure 13 est une vue partielle d'un montant destiné à équiper un dispositif d'obturation selon l'invention.

Comme déjà indiqué, le principe général de l'invention repose notamment sur l'utilisation d'un pêne de verrouillage porté par le panneau coulissant et d'un rail spécifique présentant une gâche formée de telle sorte que le passage de la position verrouillée à la position déverrouillée, ou inversement, du pêne entraîne un déplacement du panneau d'un plan d'obturation à un plan en retrait du plan d'obturation, ou inversement.

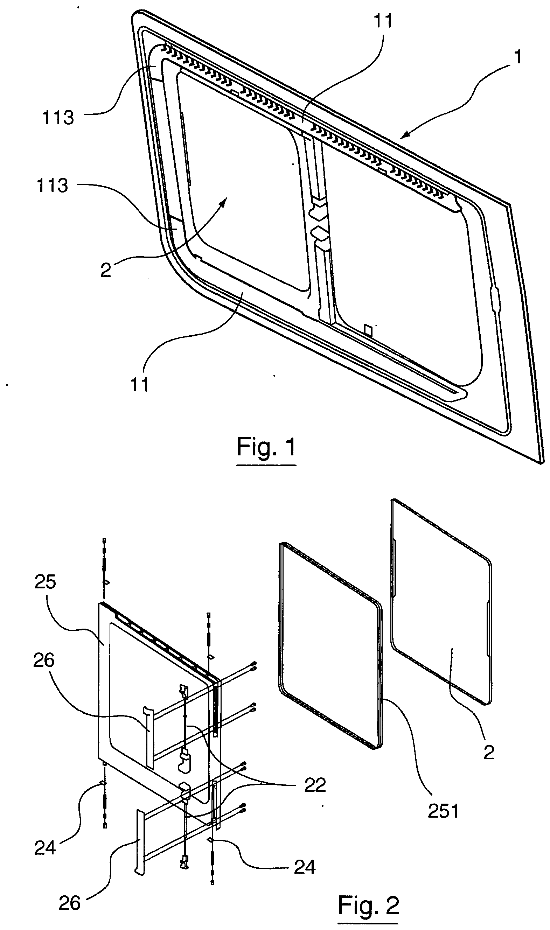

En référence à la figure 1, un dispositif d'obturation d'une baie ménagée dans la carrosserie d'un véhicule comprend un ensemble fixe 1 sur lequel est monté un panneau mobile 2, susceptible de coulisser le long de rails 11 montés en partie supérieur et en partie inférieure de l'ensemble fixe.

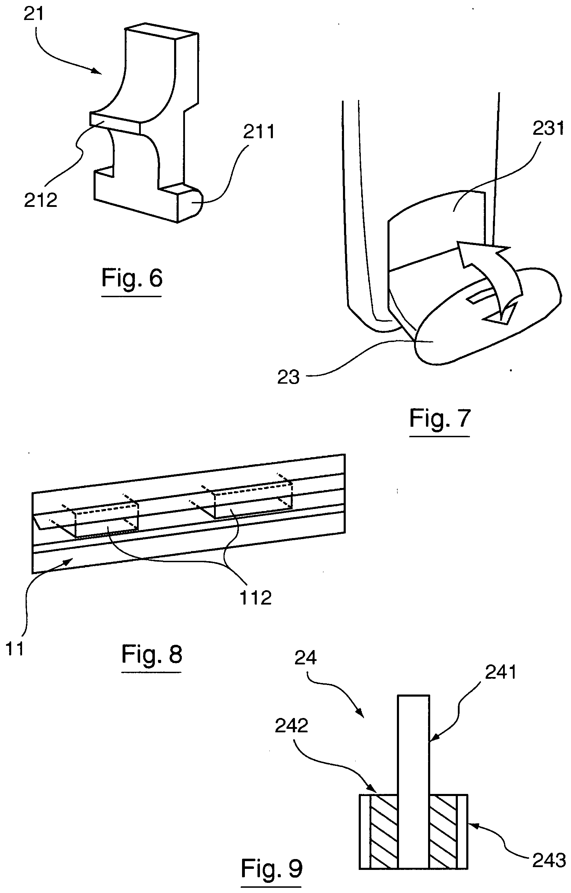

Tel qu'illustré par la figure 2, l'unité mobile comprend :
- le panneau 2, en l'occurrence une vitre ;
- un cadre 25, ici en matière plastique, sur lequel le panneau 2 est fixé ;
- un joint 251 intercalé entre le panneau 2 et le cadre 25 ;
- des moyens de verrouillage explicités plus en détails par la suite ;
- des caches 26, montés sur le panneau 2 de façon à masquer au moins des tiges de commande 22 permettant d'agir sur les moyens de verrouillage ;
- des patins de coulissement 24, en particulier du type de ceux décrits en référence à la figure 9.

Bien entendu, cette unité comprend également l'ensemble des moyens de fixation permettant de solidariser les parties constitutives entre elles.

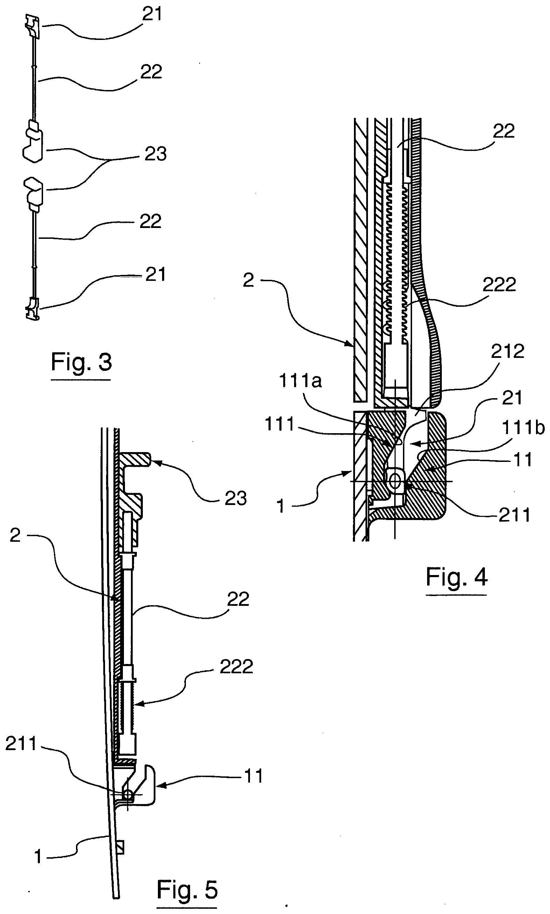

Ce panneau mobile 2 est susceptible d'occuper deux positions : une position d'obturation (telle que celle illustrée par les figures 4 et 5) dans laquelle il s'inscrit dans le plan de l'ensemble fixe 1, et une position de coulissement dans un plan parallèle à celui de l'ensemble fixe, le panneau mobile étant en l'occurrence décalé vers l'intérieur du véhicule (vers la droite sur les figures 4 et 5).

Selon le présent mode de réalisation de l'invention, le passage du panneau mobile du plan d'obturation au plan de coulissement est obtenu à l'aide d'un pêne de verrouillage 21 destiné à coopérer avec une gâche 111 ménagée dans le rail 11 (ou rapporté à une extrémité de celui-ci).

Ce pêne 21 est porté par une tige 22 montée coulissante sur le panneau mobile 2 et présentant, à son extrémité opposée au pêne 21, une poignée 23 permettant l'actionnement du pêne.

On note que le dispositif est monté de telle sorte que le mouvement de verrouillage/déverrouillage du pêne s'inscrive dans un plan parallèle à celui du panneau mobile, et dans une direction perpendiculaire à la direction de coulissement. Dans le cas présent, le panneau est mobile horizontalement et le mouvement de verrouillage/déverrouillage du pêne est obtenue en déplaçant la poignée 23 verticalement, le long du panneau mobile 2.

Tel que cela apparaît sur la figure 4, la gâche 11 présente une paire de rampes 111 a, 111b destinées à guider une portion guide 211 du pêne 21 de façon que :
- lors du déplacement ascendant du pêne 21 (à partir de la position illustrée par la figure 4), le pêne glisse sur la rampe 111a et le décale progressivement, ce qui, par conséquent, amène le panneau mobile dans un plan de coulissement le long du rail 11. Le pêne s'inscrit alors dans la glissière longitudinale du rail 11 et occupe alors une position de guidage en coulissement du panneau ;
- lors du déplacement descendant du pêne, c'est-à-dire lorsque le panneau mobile est amené dans une position dans laquelle le pêne se trouve à la verticale de la gâche 111, le pêne glisse sur la rampe 111b, ce qui ramène le pêne et le panneau vers le plan de l'ensemble fixe 1.

On comprend que, dans la position illustrée par les figures 4 et 5, le panneau se trouve engagé dans l'ouverture de la baie et que, par conséquent, il ne peut être coulissé que s'il est au préalable décalé du plan de l'ensemble fixe. Or, lors de la fermeture de la baie, le pêne guide le panneau vers sa position d'obturation et l'empêche ensuite d'être coulissé tant que le pêne n'est pas dégagé de la gâche. En cela, il constitue donc un moyen de verrouillage.

En outre, le pêne constitue également un moyen anti-intrusion.

En effet, tel que cela apparaît sur la figure 6, le pêne 21 présente une excroissance, ou nez, 212 qui, lorsque le pêne est en position de verrouillage, occupe une position telle que celle illustrée par la figure 1 . Dans cette position, ce nez 212 forme une butée susceptible de venir en contact contre une paroi du rail 11, et plus précisément contre une paroi de la gâche 111, si une poussée est exercée de l'extérieur du véhicule sur le panneau mobile en vue de l'amener dans une position de coulissement (situation pouvant être considérée comme une tentative d'intrusion).

On note de plus que le pêne 21, lorsqu'il occupe une position en regard de la gâche 111, est amené automatiquement en position de verrouillage, ceci sous l'action d'un ressort 222 montée entre le pêne 21 et une bague fixe (solidaire du panneau 2) 24 de guidage de la tige 22. Bien entendu, l'action sur la poignée 23 tendant à déverrouiller le panneau est donc exercée à l'encontre de la force de rappel du ressort 222.

Selon le mode de réalisation illustré par la figure 5, la poignée 23 est portée par la tige 22, et occupe une position fixe par rapport à la tige 22, dans le prolongement de cette dernière.

Selon une variante de réalisation, la poignée est du type de celle illustrée par la figure 7. Selon cette variante, la poignée 23 est mobile entre une position de rangement selon laquelle elle s'encastre dans un logement 231 prévu dans un socle (dans lequel s'étend la tige 22), et une position de préhension hors du logement 231.

Des moyens de rappel élastique (non représentés) tendent à ramener la poignée 23 dans sa position de rangement.

Par ailleurs, tel qu'illustré par les figures 2 et 3, un système à pêne et à gâche tel que celui décrit précédemment est montée en partie supérieure et en partie inférieure du dispositif. Une poignée 23 est associée à chacun des systèmes. Aussi, préférentiellement, les tiges d'actionnement 22 sont dimensionnées de façon que les poignées soit montées au voisinage l'une de l'autre, de telle sorte qu'elles puissent être actionnées ensemble d'une seule main.

De plus, le rail 11 est formé de façon que le pêne puisse contribuer au blocage du panneau en une ou plusieurs positions intermédiaires entre la position d'obturation et la position d'ouverture complète de la baie. Pour cela, le fond de la glissière de guidage du rail 11 présente, selon le présent mode de réalisation, deux évidements 112 (figure 8) dans lesquels la portion guide 211 du pêne peut se loger, bloquant ainsi le coulissement du panneau (il est alors nécessaire d'actionner la poignée correspondante pour poursuivre le coulissement du panneau).

Selon une autre caractéristique de l'invention, le panneau mobile porte des patins souples 24 destinés à coopérer avec les rails de guidage pour guider le coulissement du panneau.

En référence à la figure 9, ces patins sont constitués d'un axe 241 par lequel ils sont liés au panneau mobile, cet axe étant revêtu à son extrémité coulissante dans le rail d'un matériau élastomère 242, lui-même cerclé par une bague 243 réalisé en un matériau plastique présentant un faible coefficient de frottement.

Des moyens d'étanchéité spécifiques ont par ailleurs été prévus pour équiper un dispositif d'obturation selon l'invention.

Ces joints sont destinés à être légèrementécrasés par le panneau mobile lorsque celui-ci est en position d'obturation et présentent, selon le présent mode de réalisation, une lèvre (assurant une étanchéité à haute pression et dont la fonction est plus particulièrement d'assurer l'étanchéité à l'eau) et une partie tubulaire (assurant une étanchéité basse pression et procurant une isolation phonique) s'étendant parallèlement à la lèvre.

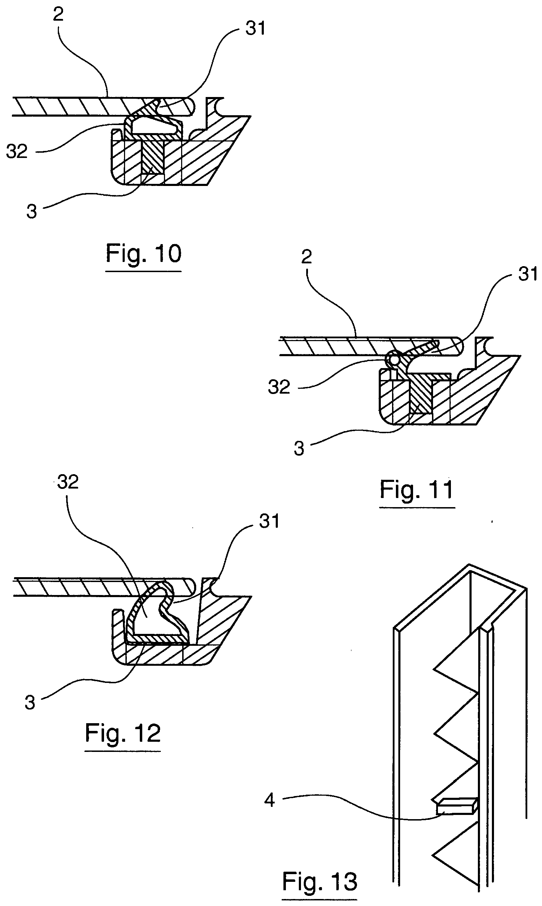

Selon une première variante de réalisation illustrée par la figure 10, le joint 3 présente un socle rigide intégrant une zone d'accroche permettant la solidarisation du joint à l'ensemble fixe. Il présente en outre une lèvre 31 portée par un élément tubulaire s'étendant sous la lèvre et parallèlement à celle-ci.

Tel que cela apparaît, seule la lèvre 31 est en contact avec le panneau mobile 2 lorsque celui-ci est en position d'obturation, la pression exercée par le panneau étant transmise à l'élément tubulaire par l'intermédiaire de la lèvre.

Selon une deuxième variante de réalisation illustrée par la figure 11, le joint 3 est formé avec la lèvre 31 s'étendant en côté de l'élément tubulaire 32, de telle sorte que, en position d'obturation du panneau 2, ce dernier exerce une pression à la fois sur la lèvre et sur l'élément tubulaire.

Selon une troisième variante illustrée par la fi-gure 12, la lèvre 31 est une lèvre creuse constituant une extension de l'élément tubulaire 32, le volume interne de la lèvre communiquant avec celui de l'élément tubulaire.

Selon encore une autre caractéristique illustrée par la figure 13, les rails 11 se prolongent pour former un montant (correspondant aux portions 113 indiquées sur la figure 1) destiné à recevoir la partie avant du panneau mobile lors de sa fermeture, de façon à constituer une butée pivot (autour de laquelle le panneau pivote de façon à ramener l'arrière du panneau dans le plan d'obturation) et intègrent des moyens d'amortissement de cette partie avant du panneau.

Selon le présent mode de réalisation, ces moyens d'amortissement sont constitués par des coussinets 4 positionnés de façon à s'intercaler entre le montant et le panneau mobile en position d'obturation de ce dernier.

## Revendications

1. Dispositif d'obturation d'une baie ménagée dans la carrosserie d'un véhicule automobile, comprenant un ensemble fixe (1) et au moins un panneau mobile (2) monté sur deux éléments de support et/ou de guidage (11) solidaires dudit ensemble fixe (1), de part et d'autre dudit panneau (2), de façon à pouvoir coulisser dans un premier plan de coulissement sensiblement parallèle à un second plan défini par ledit ensemble fixe (1), et pouvant venir obturer ou libérer une ouverture ménagée dans ledit ensemble fixe, ledit panneau mobile (2) se plaçant dans ledit second plan, en position d'obturation, ledit panneau mobile portant des moyens de verrouillage comprenant deux pênes (21) coopérant chacun avec une gâche (111) formée respectivement dans un desdits éléments de support et/ou de guidage (11), et mobiles selon une direction sensiblement perpendiculaire à l'axe de coulissement dudit panneau mobile (2), et parallèle audit panneau mobile (2), chacune desdites gâches (111) présente une paire de rampes (111a, 111b) telles que :
- lors du passage du pêne d'une position verrouillée à une position déverrouillée desdits moyens de verrouillage, selon ladite direction sensiblement perpendiculaire à l'axe de coulissement et parallèle audit panneau mobile, ledit pêne (21) glisse avec une partie guide (211) sur la première rampe (111a) et se décale progressivement, entraînant le passage dudit panneau mobile (2) dudit second plan vers ledit premier plan, et
- inversement, lors du passage du pêne d'une position déverrouillée à une position verrouillée, ledit pêne (21) glisse avec ladite partie guide (211) sur la seconde rampe (111b), ramenant ledit panneau mobile (2) dans ledit second plan, des moyens de rappel élastiques tendant à ramener lesdits moyens de verrouillage dans ladite position verrouillée.

2. Dispositif d'obturation selon la revendication 1, **caractérisé en ce que** lesdits moyens de verrouillage comprennent des moyens de blocage d'inviolabilité destinés à venir en butée sur ladite gâche (111) de façon à interdire, en position de verrouillage, un déplacement dudit panneau (2) dans une direction sensiblement perpendiculaire audit plan défini par ledit ensemble fixe (1).

3. Dispositif d'obturation selon l'une quelconque des revendications 1 et 2, **caractérisé en ce que** ledit pêne (21) coopère, en position de coulissement dudit panneau (2), avec ledit élément de support et/ou de guidage (11).

4. Dispositif d'obturation selon l'une quelconque des revendications 1 à 3, **caractérisé en ce qu'**il comprend deux poignées d'actionnement (23), une pour chaque pêne (21), lesdites poignées étant montées au voisinage l'une de l'autre de façon à pouvoir être manipulées d'une seule main.

5. Dispositif d'obturation selon l'une quelconque des revendications 1 à 4, **caractérisé en ce qu'**il comprend au moins une poignée d'actionnement (23) desdits moyens de verrouillage mobile entre une position de rangement selon laquelle elle s'encastre dans un logement (231) et une position de préhension, hors dudit logement (231).

6. Dispositif d'obturation selon la revendication 5, **caractérisé en ce que** ladite poignée d'actionnement (23) est équipée de moyens de rappel tendant à la ramener dans ladite position de rangement.

7. Dispositif d'obturation selon l'une quelconque des revendications 1 à 6, **caractérisé en ce que** ledit ou lesdits éléments de support et/ou de guidage (11) présentent au moins un logement (112) formant cran d'arrêt, dans lequel ledit ou lesdits pênes (21) sont susceptibles de se loger, dans une position intermédiaire dudit panneau (2).

8. Dispositif d'obturation selon l'une quelconque des revendications 1 à 7, **caractérisé en ce que** ledit panneau mobile (2) porte au moins un patin (24) destiné à coulisser dans ledit ou lesdits éléments de support et/ou de guidage (11), au moins une partie dudit ou desdits patins coulissant dans ledit ou lesdits éléments de support et/ou de guidage (11) étant réalisé en un matériau souple.

9. Dispositif d'obturation selon la revendication 8, **caractérisé en ce que** ledit ou lesdits (12) patins sont reliés audit panneau mobile (2) par un axe (241) revêtu d'un matériau élastomère (242) entouré d'une bague (243) réalisée dans un matériau plastique à faible coefficient de frottement.

10. Dispositif d'obturation selon l'une quelconque des revendications 1 à 9, **caractérisé en ce que** ledit ensemble présente un joint d'étanchéité (3) sur lequel ledit panneau mobile (2) est destiné à venir prendre appui en position d'obturation, ledit joint (3) comprenant au moins une partie formant lèvre d'étanchéité (31) et au moins une partie tubulaire (32) s'étendant sensiblement parallèlement à ladite lèvre (31).

11. Dispositif d'obturation selon la revendication 10, **caractérisé en ce que** ladite lèvre (31) est portée par ladite partie tubulaire (32).

12. Dispositif d'obturation selon l'une quelconque des revendications 10 et 11, **caractérisé en ce que** ladite lèvre (31) s'étend en côté de ladite partie tubulaire (32) de façon que ledit panneau (2) vienne en appui sur ladite lèvre (31) et sur ladite partie tubulaire (32).

13. Dispositif d'obturation selon l'une quelconque des revendications 1 à 12, **caractérisé en ce que** ledit ensemble fixe (1) comprend des moyens de réception de la partie avant dudit panneau mobile (2), selon la direction de fermeture, lesdits moyens de réception comprenant des moyens d'amortissement des déplacements de ladite partie avant.

14. Dispositif d'obturation selon la revendication 13, **caractérisé en ce que** lesdits moyens d'amortissement comprennent au moins un coussinet (4).

15. Véhicule automobile comprenant au moins un dispositif d'obturation d'une baie ménagée dans la carrosserie d'un véhicule automobile selon l'une quelconque des revendications 1 à 14.

## Patentansprüche

1. Verschlussvorrichtung für eine Öffnung, die in der Karosserie eines Kraftfahrzeugs eingerichtet ist, die eine stationäre Einheit (1) und mindestens eine bewegliche Platte (2) aufweist, die auf zwei Trag- und/oder Führungselementen (11), die mit der stationären Einheit (1) fest verbunden sind, auf beiden Seiten der Platte (2) derart montiert ist, dass sie in einer ersten Gleitebene, die im Wesentlichen parallel zu einer zweiten, von der stationären Einheit (1) definierten Ebene ist, gleiten und die Öffnung, die in der stationären Einheit eingerichtet ist, verschließen oder freigeben kann, wobei sich die bewegliche Platte (2) in der zweiten Ebene in Verschlussposition begibt,
wobei die bewegliche Platte Verriegelungsmittel trägt, die zwei Riegel (21) aufweisen, der jeweils mit einer Raste (111) zusammenwirken, die entsprechend in den Trag- und/oder Führungselementen (11) ausgebildet und entlang einer Richtung im Wesentlichen senkrecht zu der Gleitachse der beweglichen Platte (2) und parallel zu der beweglichen Platte (2) beweglich ist, wobei jede dieser Rasten (111) ein Paar Rampen (111a, 111b) derart aufweist, dass:
- beim Übergang des Riegels von einer verriegelten Position zu einer entriegelten Position der Verriegelungsmittel entlang der Richtung im Wesentlichen senkrecht zu der Gleitachse und parallel zu der beweglichen Platte, der Riegel (21) mit einem Führungsteil (211) auf der ersten Rampe (111a) gleitet und sich allmählich verlagert, indem er den Übergang der beweglichen Platte (2) von der zweiten Ebene zu der ersten Ebene bewirkt, und
- umgekehrt, bei dem Übergang des Riegels von einer entriegelten Position zu einer verriegelten Position, der Riegel (21) auf der zweiten Rampe (111b) mit dem Führungsteil (211) gleitet und die bewegliche Platte (2) in die zweite Ebene zurückbringt, wobei elastische Rückstellmittel darauf hinwirken, die Verriegelungsmittel in die verriegelte Position zurückzubringen.

2. Verschlussvorrichtung nach Anspruch 1, **dadurch gekennzeichnet, dass** die Verriegelungsmittel Blockier-Mittel zum Verletzungsschutz aufweisen, die dazu bestimmt sind, auf der Raste (111) derart zum Anschlagen zu kommen, dass in Verriegelungsposition eine Verlagerung der Platte (2) in eine Richtung im Wesentlichen senkrecht zu der von der stationären Einheit (1) definierten Ebene untersagt wird.

3. Verschlussvorrichtung nach einem der Ansprüche 1 und 2, **dadurch gekennzeichnet, dass** der Riegel (21) in Gleitposition der Platte (2) mit dem Trag- und/oder Führungselement (11) zusammenwirkt.

4. Verschlussvorrichtung nach einem der Ansprüche 1 bis 3, **dadurch gekennzeichnet, dass** sie zwei Betätigungsgriffe (23) aufweist, einen für jeden Riegel (21), wobei die Griffe in der Nähe voneinander derart montiert sind, dass sie mit einer einzigen Hand betätigt werden können.

5. Verschlussvorrichtung nach einem der Ansprüche 1 bis 4, **dadurch gekennzeichnet, dass** sie mindestens einen Betätigungsgriff (23) der Verriegelungsmittel aufweist, der zwischen einer Verstauposition, gemäß der er sich in eine Aufnahme (231) fügt, und einer Greifposition außerhalb der Aufnahme (231) beweglich ist.

6. Verschlussvorrichtung nach Anspruch 5, **dadurch gekennzeichnet, dass** der Betätigungsgriff (23) mit Rückstellmitteln versehen ist, die darauf hinwirken, ihn in die Verstauposition zurückzustellen.

7. Verschlussvorrichtung nach einem der Ansprüche 1 bis 6, **dadurch gekennzeichnet, dass** das oder die Trag- und/oder Führungselemente (11) mindestens eine Aufnahme (112) aufweisen, die eine Sperrklinke bilden, in welcher der oder die Riegel (21) in einer Zwischenposition der Platte (2) aufgenommen werden können.

8. Verschlussvorrichtung nach einem der Ansprüche 1 bis 7, **dadurch gekennzeichnet, dass** die bewegliche Platte (2) mindestens eine Kufe (24) aufweist, die dazu bestimmt ist, in dem oder in den Trag- und/oder Führungselementen (11) zu gleiten, wobei mindestens ein Teil der Kufe oder der Kufen in dem oder in den Trag- und/oder Führungselement (11) gleitet, das/die aus einem biegsamen Material hergestellt sind.

9. Verschlussvorrichtung nach Anspruch 8, **dadurch gekennzeichnet, dass** die Kufe oder die Kufen (24) mit der beweglichen Platte (2) durch eine Achse (241) verbunden sind, die mit einem Elastomermaterial (242) beschichtet ist, das von einem Ring (243) umgeben ist, der aus einem Kunststoffmaterial mit geringem Reibungskoeffizienten hergestellt ist.

10. Verschlussvorrichtung nach einem der Ansprüche 1 bis 9, **dadurch gekennzeichnet, dass** die Einheit eine Dichtung (3) aufweist, an welcher die bewegliche Platte (2) in Verschlussposition zum Anliegen kommen soll, wobei die Dichtung (3) mindestens einen Teil aufweist, der eine Dichtlippe (31) bildet, und mindestens einen röhrenförmigen Teil (32), der sich im Wesentlichen parallel zu der Lippe (31) erstreckt.

11. Verschlussvorrichtung nach Anspruch 10, **dadurch gekennzeichnet, dass** die Lippe (31) von dem röhrenförmigen Teil (32) getragen wird.

12. Verschlussvorrichtung nach einem der Ansprüche 10 und 11, **dadurch gekennzeichnet, dass** sich die Lippe (31) neben dem röhrenförmigen Teil (32) derart erstreckt, dass die Platte (2) an der Lippe (31) und an dem röhrenförmigen Teil (32) zum Anliegen kommt.

13. Verschlussvorrichtung nach einem der Ansprüche 1 bis 12, **dadurch gekennzeichnet, dass** die stationäre Einheit (1) Aufnahmemittel des vorderen Teils der beweglichen Platte (2) entlang der Verschlussrichtung aufweist, wobei die Aufnahmemittel Mittel zum Dämpfen der Verlagerungen des vorderen Teils aufweisen.

14. Verschlussvorrichtung nach Anspruch 13, **dadurch gekennzeichnet, dass** die Dämpfmittel mindestens ein Kissen (4) aufweisen.

15. Kraftfahrzeug, das mindestens eine Verschlussvorrichtung einer Öffnung, die in der Karosserie eines Kraftfahrzeugs eingerichtet ist, gemäß einem der Ansprüche 1 bis 14 aufweist.

## Claims

1. Device for closure of a window bay provided in the bodywork of a motor vehicle, comprising a fixed assembly (1) and at least one mobile panel (2) mounted on two support and/or guiding elements (11)which are integral with the said fixed assembly (1), on both sides of the said panel (2), such as to be able to slide on a first sliding plane substantially parallel to a second plane which is defined by the said fixed assembly (1), and can close or open up an opening provided in the said fixed assembly, the said mobile panel (2) being placed on the said second plane in the closure position,
the said mobile panel bearing locking means comprising two latches (21) which each co-operates with a catch (111) formed respectively in one of the said support and/or guiding elements (11), and is mobile according to a direction substantially perpendicular to the axis of sliding of the said mobile panel (2), and parallel to the said mobile panel (2),
each of said catches (111) has a pair of ramps (111a, 111b) such that:
- during the passage of the latch from a locked position to an unlocked position of the said locking means, according to the said direction substantially perpendicular to the axis of sliding and parallel to the said mobile panel, the said latch (21) slides with a guide part (211) on the first ramp (111a) and is offset progressively, thus giving rise to the passage of the said mobile panel (2) of the said second plane towards the said first plane, and
- conversely, during the passage of the latch from an unlocked position to a locked position, the said latch (21) slides with the said guide part (211) on the second ramp (111b), thus returning the said mobile panel (2) onto the said second plane, resilient return means tending to return the said locking means to the said locked position.

2. Device for closure according to claim 1, **characterised in that** the said locking means comprise inviolable blocking means which are designed to abut the said catch (111), such as, in the locking position, to prevent displacement of the said panel (2) in a direction substantially perpendicular to the said plane defined by the said fixed assembly (1).

3. Device for closure according to either of claims 1 and 2, **characterised in that**, in the sliding position of the said panel (2), the said latch (21) co-operates with the said support and/or guiding element (11).

4. Device for closure according to any one of claims 1 to 3, **characterised in that**, **characterised in that** it comprises two actuating handles (23), one for each catch (21), the said handles being mounted in the vicinity of one another in order to be able to be manipulated with a single hand.

5. Device for closure according to any one of claims 1 to 4, **characterised in that** it comprises at least one handle (23) for actuation of the said locking means, which is mobile between a storage position according to which it is embedded in a receptacle (231), and a grasping position, outside the said receptacle (231).

6. Device for closure according to claim 5, **characterised in that** the said actuating handle (23) is equipped with return means which tend to return it to the said storage position.

7. Device for closure according to any one of claims 1 to 6, **characterised in that** the said support and/or guiding elements (11) have at least one receptacle (112) which forms a stoppage notch in which the said latch(es) (21) can be accommodated, in an intermediate position of the said panel (2).

8. Device for closure according to any one of claims 1 to 7, **characterised in that** the said mobile panel (2) bears at least one runner (24) which is designed to slide in the said support and/or guiding element(s) (11), at least part of the said runner(s) which slide(s) in the said support and/or guiding element(s) (11) being made of a flexible material.

9. Device for closure according to claim 8, **characterised in that** the said runner(s) (12) is/are connected to the said mobile panel (2) by a shaft (241) covered with an elastomer material (242) surrounded by a ring (243) which is made of a plastic material with a low coefficient of friction.

10. Device for closure according to any one of claims 1 to 9, **characterised in that** the said assembly has a seal (3) on which the said mobile panel (2) is designed to be supported in the closure position, the said seal (3) comprising at least a part which forms a sealing lip (31) and at least a tubular part (32) which extends substantially parallel to the said lip (31).

11. Device for closure according to claim 10, **characterised in that** the said lip (31) is supported by the said tubular part (32).

12. Device for closure according to either of claims 10 and 11, **characterised in that** the said lip (31) extends from the side of the said tubular part (32), such that the said panel (2) is supported on the said lip (31) and on the said tubular part (32).

13. Device for closure according to any one of claims 1 to 12, **characterised in that** the said fixed assembly (1) comprises means for receipt of the front part of the said mobile panel (2), according to the direction of closure, the said means for receipt comprising means for damping of the displacements of the said front part.

14. Device for closure according to claim 13, **characterised in that** the said damping means comprise at least one bearing (4).

15. Motor vehicle comprising at least one device for closure of a window bay provided in the bodywork of a motor vehicle according to any one of claims 1 to 14.
